# EUROPEAN PATENT APPLICATION

(11) **EP 4 641 157 A1**
(43) Date of publication of application: **29.10.2025**
(21) Application number: 25165322.6
(22) Date of filing: 21.03.2025
(51) Int. Cl.: G01L 19/00, G01L 19/14

(54) **PRESSURE SENSOR WITH AUXILLIARY CONNECTIONS AND FLAT PORT**

(30) Priority: 25.04.2024 IN 202411032798
(71) Applicant: Honeywell International Inc., Charlotte, NC 28202 (US)
(72) Inventor: GIRAMALLANAVAR, Shivaraj, Charlotte, 28202 (US); YAGATI, Veeresh Shivaprakash, Charlotte, 28202 (US); MARENAYAKANAHALLI NARASIMHAMURTHY, Naveen Kumar, Charlotte, 28202 (US); KRISHNAPPA, Yogesh, Charlotte, 28202 (US)
(74) Representative: Haseltine Lake Kempner LLP

(57) **Abstract**

A pressure sensor is provided. For example, a pressure sensor comprises a base port connected to fluid source whose pressure is to be sensed, a sensing portion to receive the fluid via the base port, and a connector portion comprising a main body and first and second pluralities of connector pins. The sensing portion comprises a diaphragm, a sense die, a pressure transfer fluid, and a printed circuit board (PCB). Each of the first plurality of connector pins has a first end electrically connected to the PCB and a second end exposed via an open end of the main body. Each of the second plurality of connector pins has a first end exposed through a side wall of the main body and a second end exposed via the open end of the main body.

## Description

### FIELD OF THE INVENTION

Embodiments of the present disclosure generally relate to pressure sensors, and, more particularly, to pressure sensors used with frictionless braking.

### BACKGROUND

Pressure sensors are devices that measure the force exerted by media (gas or liquid) on a sensing surface. Pressure sensors are used for control and monitoring in thousands of everyday applications. Media isolation of pressure sensors is critical in applications involving various hazardous media, such as but not limited to hydraulic fluids, water, steam, and corrosive chemicals.

Frictionless braking is a supplemental brake system used on large motor vehicles that slows the vehicle but is not designed to stop the vehicle completely. Such devices are common on long haul trucks and buses. In frictionless braking, pressure sensors are used for measuring the exhaust gas/oil pressure. The sensed pressure signal is sent to a controller which controls a solenoid to open and close a valve to provide the desired frictionless braking.

Such sensors are plagued by technical challenges and limitations. Through applied effort, ingenuity, and innovation, many of these identified problems have been solved by developing solutions that are included in embodiments of the present disclosure, many examples of which are described in detail herein.

### BRIEF SUMMARY

Various embodiments described herein relate to pressure sensors and associated methods of controlling one or more devices based at least in part on a pressure measurement.

In accordance with various embodiments of the present disclosure, a pressure sensor is provided. In some embodiments, a pressure sensor comprises a base port adapted to be connected to a source of a fluid whose pressure is to be sensed, a sensing portion adapted to receive the fluid via the base port, and a connector portion having a main body and comprising a first plurality of connector pins and a second plurality of connector pins. The sensing portion comprises a diaphragm adapted to be contacted by the fluid when the base port is connected to the source of the fluid, a sense die, a pressure transfer fluid to translate movement of the diaphragm to the sense die, and a printed circuit board (PCB) electrically connected to the sense die. Each of the first plurality of connector pins has a first end electrically connected to the PCB and a second end exposed via an open end of the main body. Each of the second plurality of connector pins has a first end exposed through a side wall of the main body and a second end exposed via the open end of the main body. The second ends of each of the first plurality of connector pins are adapted to be electrically connected to a controller such that the controller receives a pressure signal from the PCB. The second ends of each of the second plurality of connector pins are adapted to be electrically connected to the controller. The first ends of each of the second plurality of connector pins are adapted to be electrically connected to one or more external devices.

In some embodiments, each of the second plurality of connector pins are adapted to pass one or more control signals from the controller to the one or more external devices.

In some embodiments, at least a portion of each of the first plurality of connector pins and at least a portion of each of the second plurality of connector pins are molded into the main body of the connector portion.

In some embodiments, the open end of the main body of the connector portion comprises an externally threaded wall that defines a cavity, and the second ends of the first plurality of connector pins and the second ends of the second plurality of connector pins do not extend outside of the cavity.

In some embodiments, the cavity comprises a reduced diameter proximal portion, and the pressure sensor further comprises a sealant within the reduced diameter proximal portion to seal a plurality of openings through which the first plurality of connector pins and the second plurality of connector pins protrude into the cavity.

In some embodiments, each of the first plurality of connector pins comprise an elongated cylindrical portion and a terminal having a portion that is substantially perpendicular to a longitudinal axis of the elongated cylindrical portion.

In some embodiments, the PCB comprises a plurality of planar terminals, the pressure sensor further comprises a plurality of springs, and each of the plurality of springs is sandwiched between a respective one of the plurality of planar terminals of the PCB and the substantially perpendicular portion of the terminal of a respective one of the first plurality of connector pins.

In some embodiments, the terminal of each of the first plurality of connector pins has a portion that is between the elongated cylindrical portion and the substantially perpendicular portion and that is substantially parallel to the longitudinal axis of the elongated cylindrical portion.

In some embodiments, each of the second plurality of connector pins comprises an elongated cylindrical portion and a terminal attached to and projecting substantially perpendicularly from the elongated cylindrical portion relative to a longitudinal axis of the elongated cylindrical portion.

In some embodiments, the base port comprises a substantially cylindrical body defining a longitudinal through-hole, the through-hole defined by (a) an enlarged funnel-shaped proximal open end, (b) a throat having (i) a first portion adjacent the funnel-shaped proximal open end and having a first diameter and a (ii) second portion having a second diameter smaller than the first diameter, and (c) an enlarged distal open end adjacent the second portion of the throat.

In accordance with various embodiments of the present disclosure, a method of controlling one or more devices based at least in part on a pressure measurement is provided. In some embodiments, the method comprises connecting a pressure sensor as described above to a source of a fluid whose pressure is to be sensed; electrically connecting a controller to the second ends of each of the first plurality of connector pins and to the second ends of each of the second plurality of connector pins; electrically connecting the one or more devices to the first ends of each of the second plurality of connector pins; receiving, by the controller, a pressure signal from the PCB via the first plurality of pins, the pressure signal corresponding to a pressure of the fluid against the diaphragm; and sending, by the controller, a control signal to the one or more devices via the second plurality of pins, the control signal based at least in part on the received pressure signal.

The foregoing illustrative summary, as well as other exemplary objectives and/or advantages of the disclosure, and the manner in which the same are accomplished, are further explained in the following detailed description and its accompanying drawings.

### BRIEF DESCRIPTION OF THE DRAWINGS

The description of the illustrative embodiments may be read in conjunction with the accompanying figures. It will be appreciated that, for simplicity and clarity of illustration, elements illustrated in the figures have not necessarily been drawn to scale, unless described otherwise. For example, the dimensions of some of the elements may be exaggerated relative to other elements, unless described otherwise. Embodiments incorporating teachings of the present disclosure are shown and described with respect to the figures presented herein, in which:
FIG. 1 is a top perspective view of an example pressure sensor in accordance with example embodiments of the present disclosure;
FIG. 2 is a bottom perspective view of the example pressure sensor of FIG. 1;
FIG. 3 is a longitudinally bisecting sectional view of the example pressure sensor of FIG. 1;
FIG. 4 is a top perspective view of an example base port of the example pressure sensor of FIG. 1;
FIG. 5 is a longitudinally bisecting top perspective sectional view along line 5-5 of the example base port of the example pressure sensor of FIG. 4;
FIG. 6 is a longitudinally bisecting partial sectional view of the example pressure sensor of FIG. 1 during calibration;
FIG. 7 is a top perspective view of example connection pins of the example pressure sensor of FIG. 1;
FIG. 8 is a bottom perspective view of example connection pins of the example pressure sensor of FIG. 1;
FIG. 9 is a bottom perspective exploded view of an example connection pin of the example pressure sensor of FIG. 1; and
FIG. 10 is a bottom perspective view of an example connection pin of the example pressure sensor of FIG. 1.

### DETAILED DESCRIPTION OF THE INVENTION

Some embodiments of the present disclosure will now be described more fully hereinafter with reference to the accompanying drawings, in which some, but not all embodiments of the disclosure are shown. Indeed, these disclosures may be embodied in many different forms and should not be construed as limited to the embodiments set forth herein; rather, these embodiments are provided so that this disclosure will satisfy applicable legal requirements. Like numbers refer to like elements throughout.

As used herein, terms such as "front," "rear," "top," "bottom," "left," "right," etc. are used for explanatory purposes in the examples provided below to describe the relative position of certain components or portions of components. Furthermore, as would be evident to one of ordinary skill in the art in light of the present disclosure, the terms "substantially" and "approximately" indicate that the referenced element or associated description is accurate to within applicable engineering tolerances.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," "in some embodiments," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The phrases "in one example," "according to one example," "in some examples," and the like generally mean that the particular feature, structure, or characteristic following the phrase may be included in at least one example of the present disclosure and may be included in more than one example of the present disclosure (importantly, such phrases do not necessarily refer to the same example).

If the specification states a component or feature "may," "can," "could," "should," "would," "preferably," "possibly," "typically," "optionally," "for example," "as an example," "in some examples," "often," or "might" (or other such language) be included or have a characteristic, that specific component or feature is not required to be included or to have the characteristic. Such component or feature may be optionally included in some examples, or it may be excluded.

The word "example" or "exemplary" is used herein to mean "serving as an example, instance, or illustration." Any implementation described herein as "example" or "exemplary" is not necessarily to be construed as preferred or advantageous over other implementations.

The term "electronically coupled," "electronically coupling," "electronically couple," "in communication with," "in electronic communication with," or "connected" in the present disclosure refers to two or more elements or components being connected through wired means and/or wireless means, such that signals, electrical voltage/current, data and/or information may be transmitted to and/or received from these elements or components.

The term "fluidly coupled," "fluidly coupling," "fluidly couple," "in fluid communication with," "in fluid connection with," or "fluidly connected" in the present disclosure refers to two or more elements or components being connected, directly or indirectly, such that a fluid may flow, directly or indirectly, between the two or more elements or components.

The term "component" may refer to an article, a device, or an apparatus that may comprise one or more surfaces, portions, layers and/or elements. For example, an example component may comprise one or more substrates that may provide underlying layer(s) for the component and may comprise one or more elements that may form part of and/or are disposed on top of the substrate. In the present disclosure, the term "element" may refer to an article, a device, or an apparatus that may provide one or more functionalities.

Various embodiments of the present disclosure overcome the above technical challenges and difficulties and provide various technical improvements and advantages. For example, various embodiments of the present disclosure provide an example pressure sensor and an example method of controlling one or more devices based at least in part on a pressure measurement.

In various embodiments of the present disclosure, a pressure sensor is provided in which, in addition to the terminal for providing a sensed pressure signal to an external device such as a controller, additional terminals are provided to enable a connection between one or more pairs of external devices. For example, in various embodiments such additional terminals provide a connection between a controller receiving a sensed pressure signal from the pressure sensor and an external device that the controller is controlling based at least partly on the sensed pressure signal.

Pressure sensors of embodiments of the present disclosure may be used for any suitable application or purpose. For example, pressure sensors of embodiments of the present disclosure may be used with a frictionless braking system of a vehicle, such as but not limited to hydrodynamic retarder systems or electronically controlled exhaust valve brake systems. In such an example, a pressure sensor of embodiments of the present disclosure provides a connection between a controller receiving a sensed pressure signal from the pressure sensor and an exhaust gas valve of an electronically controlled exhaust valve brake system such that the controller controls the exhaust gas valve based at least in part on the sensed pressure signal from the pressure sensor. The sensed pressure signal is sent to controller and the controller decides the amount of exhaust opening / exhaust pressure for the required braking. The controller sends a signal to externally connected solenoid valves to control the exhaust valve opening to control the exhaust pressure.

In various embodiments of the present disclosure, a pressure sensor is provided in which a base port has an internal throat structure which readily facilitates the proper insertion of a nozzle for injecting a fluid of a known pressure for calibration of the pressure sensor.

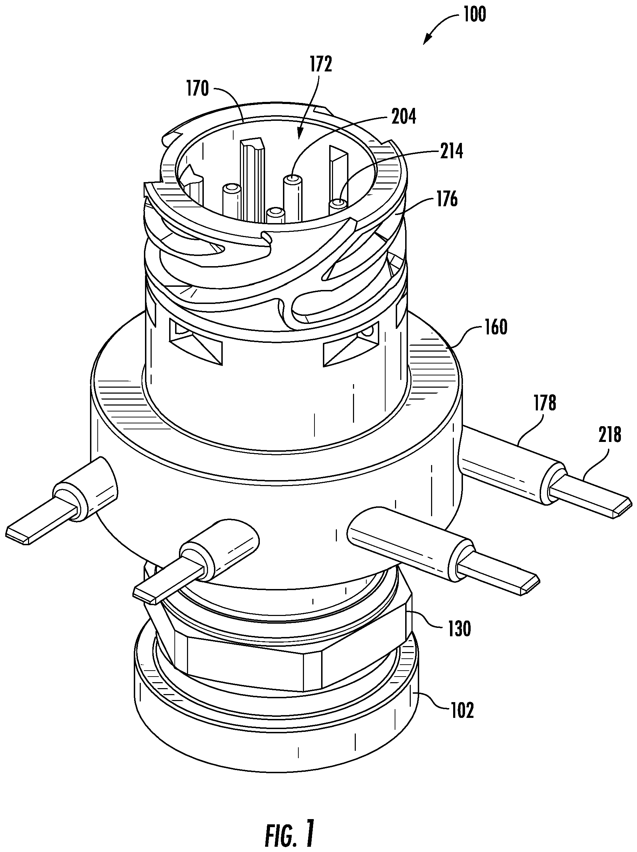

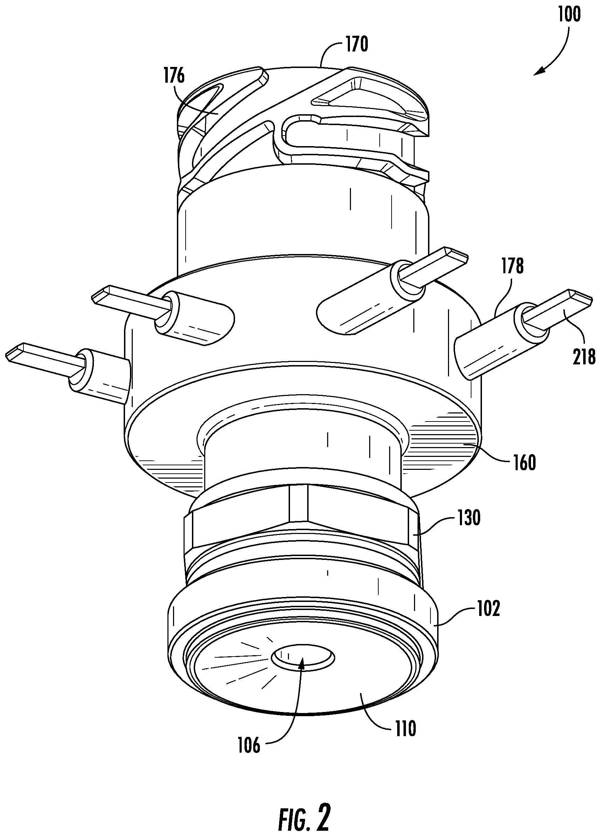

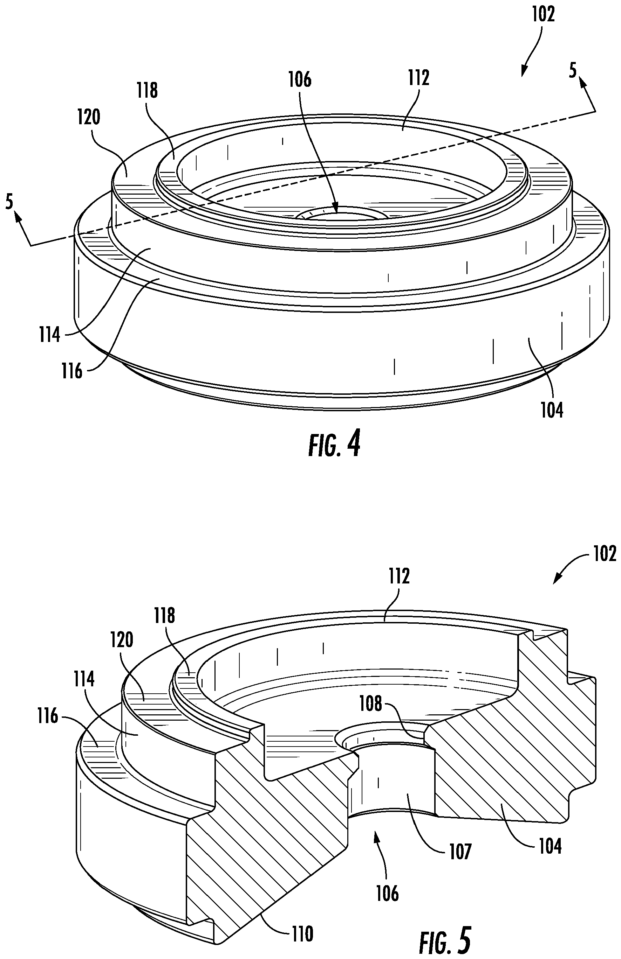

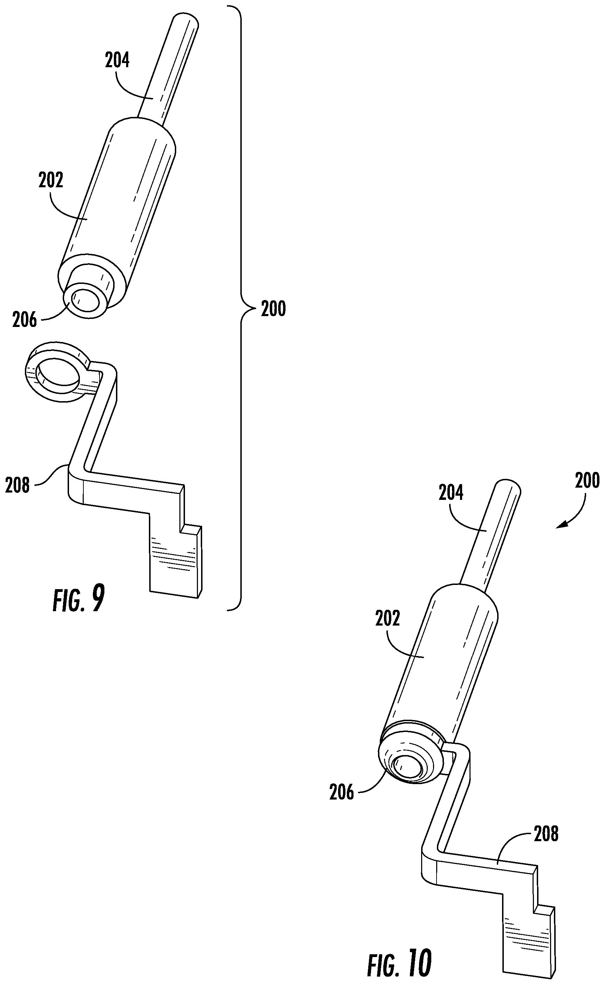

Referring now to FIGS. 1-10, an example pressure sensor is illustrated in accordance with example embodiments of the present disclosure. The pressure sensor 100 of FIGS. 1-10 comprises a base port 102, a sensing portion 130, and a connector portion 160. In various embodiments, the pressure sensor 100 is connected via the base port 102 to a source of a fluid (not illustrated) whose pressure is to be sensed. For example, some of what may be termed the proximal end of the pressure sensor (e.g., the base port 102 and the sensing portion 130) is inserted and secured into a cavity (not illustrated) of a fluid access port such that a through-hole or channel 106 in the base port 102 aligns with a hole at the bottom of the cavity through which the fluid whose pressure is to be sensed is supplied to the pressure sensor 100. In such an example, the pressure sensor 100 may be secured into the cavity via a securing ring. As used herein, the term "proximal" refers to a direction toward an end of the pressure sensor that connects to the fluid access port to access the fluid whose pressure is to be measured, while the term "distal" refers to a direction toward the opposite end of the pressure sensor (i.e., away from the port to access the fluid whose pressure is to be measured).

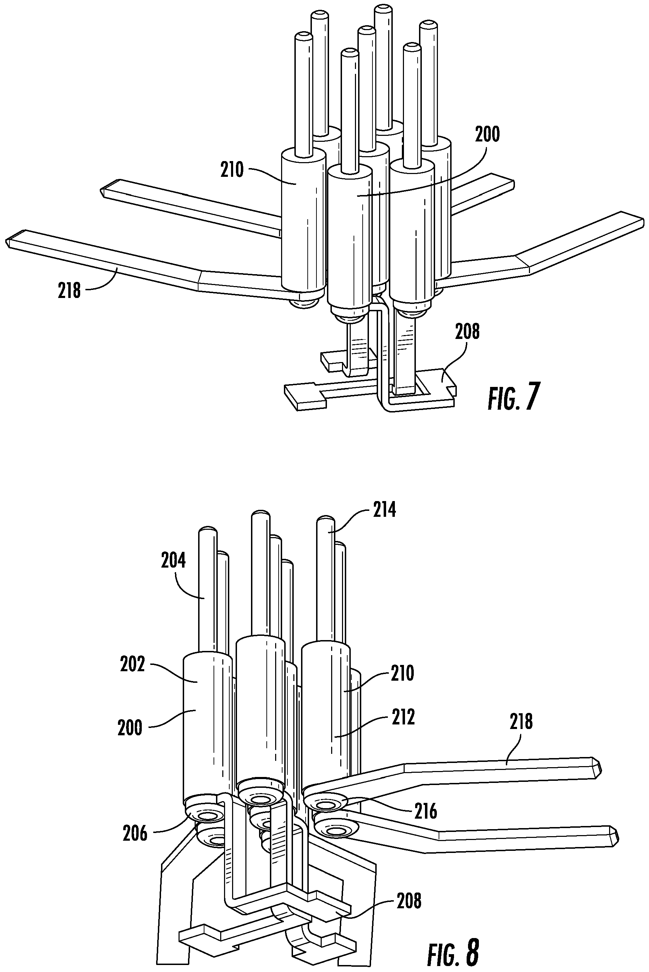

In various embodiments, one end of a cable (not illustrated) is attached to the top, distal open end 170 of the pressure sensor by threading such a cable onto the pressure sensor 100 via external threads 176, while the other end of the cable is attached to, for example, a controller (not illustrated) which will receive a pressure signal from the pressure sensor 100. The open end 170 defines a cavity 172 in which are recessed the second or distal ends 204 of the pins of a first plurality of pin assemblies 200 and the second or distal ends 214 of the pins of a second plurality of pin assemblies 210 (shown in detail in FIGS. 7-10). In various embodiments, the second or distal ends 204 of the pins of a first plurality of pin assemblies 200 and the second or distal ends 214 of the pins of a second plurality of pin assemblies 210 do not extend past the open end 170.

The first plurality of pin assemblies 200 may be termed internal pin assemblies or simply internal pins as the first plurality of pin assemblies 200 provide a connection to a component (a printed circuit board, described below) that is internal to the pressure sensor 100, while the second plurality of pin assemblies 210 may be termed external pin assemblies or simply external pins as the second plurality of pin assemblies 210 provide a connection between components (e.g., a controller and a solenoid (not illustrated)) that are external to the pressure sensor 100. As seen in FIGS. 1-3, first ends of the second plurality of pin assemblies 210 comprise terminals 218 that project substantially perpendicularly through a side wall and outward from the connector portion 160. To provide strength and stability, each of the terminals 218 of the second plurality of pin assemblies 210 is partially enclosed by a blade support extension 178 that are extensions of the main body 162 of the connector portion 160. The first plurality of pin assemblies 200 and the second plurality of pin assemblies 210 are partially molded into the main body 162 of the connector portion 160. In the illustrated embodiment, as seen in FIGS. 7-10, the pressure sensor 100 includes three of the first plurality of pin assemblies 200 and four of the second plurality of pin assemblies 210.

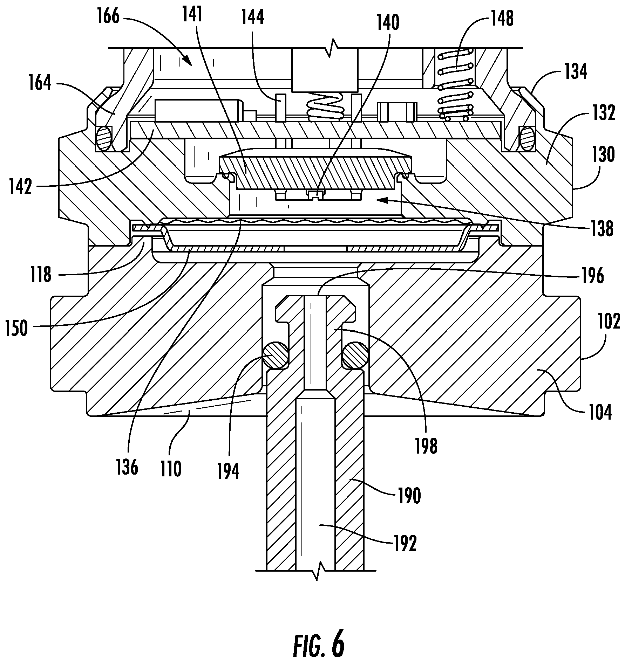

In the illustrated embodiment, the base port 102 comprises a substantially cylindrical body 104 defining a longitudinal through-hole or channel 106. The base port 102 comprises an enlarged funnel-shaped proximal open end 110, a throat 107 having a reduced diameter distal neck 108, and a distal open end 112 adjacent the distal neck 108 of the throat 107. In the illustrated embodiment, the base port 102 comprises a first collar 114 defining a first shoulder 116 and a smaller diameter second collar 118 defining a second shoulder 120. As best seen in FIG.6, the bottom or proximal edge of the sensing portion 130 contacts the second shoulder 120 and the second collar 118 sits within the open proximal end of the sensing portion 130. The base port 102 and the sensing portion 130 may be affixed to each other using any suitable method or mechanism. In various embodiments, the base port 102 and the sensing portion 130 are welded together, such as via laser or electron beam welding, where the bottom or proximal edge of the sensing portion 130 contacts the second shoulder 120.

In various embodiments, the sensing portion 130 comprises a generally hex nut shaped main body 132 defining a through-hole or channel (not labeled), a diaphragm 136 spanning the channel, a diaphragm cap 150 having a through-hole and holding the diaphragm 136 in position, a sense die 140 mounted to a transistor outline (TO) header assembly 141, and a printed circuit board (PCB) 142. In various embodiments, the diaphragm 136 is positioned to be impacted by the fluid entering the pressure sensor 100 via the base port 102, such that the pressure of the fluid causes a corresponding deflection of the diaphragm 136. A chamber 138 between the diaphragm 136 and the sense die 140 contains a pressure transfer fluid (e.g., oil) (not illustrated). Deflection of the diaphragm 136 causes the pressure transfer fluid to push against the sense die 140. In some embodiments, the sense die 140 comprises a piezoresistive sense die whose electrical resistance will change based on its volumetric compression caused by the pressure transfer fluid. In various embodiments, the PCB 142 is electrically connected to the sense die 140 via a plurality of pins 144 to enable the PCB 142 to determine the resistance of the sense die 140 and thereby provide an output that is representative of the pressure of the pressure transfer fluid against the sense die 140. In various embodiments, the PCB 142 has a plurality of planar terminals 146 on its upper surface, with the number of planar terminals 146 being equal to the number of pin assemblies 200.

In the illustrated embodiment, the connector portion 160 comprises a main body 162 with a solid center portion, an open bottom, proximal end chamber 166 to allow for the connections between the planar terminals 146 of the PCB 142 and the terminals (described below) of the first plurality of pin assemblies 200, and a top, distal open end 170 to allow for a cable to be connected to the smaller diameter distal portion 204, 214 of, respectively, the pins of the first and second pluralities of pin assemblies 200, 210. As described above, the first plurality of pin assemblies 200 and the second plurality of pin assemblies 210 are partially molded into the solid center portion of the main body 162 of the connector portion 160.

In the illustrated embodiment, the cavity 172 of the connector portion 160 comprises a reduced diameter proximal portion 174. In various embodiments, a sealant (e.g., epoxy) (not illustrated) is placed within the reduced diameter proximal portion 174 to seal a plurality of openings through which the first plurality of connector pin assemblies 200 and the second plurality of connector pin assemblies 210 protrude into the cavity 172.

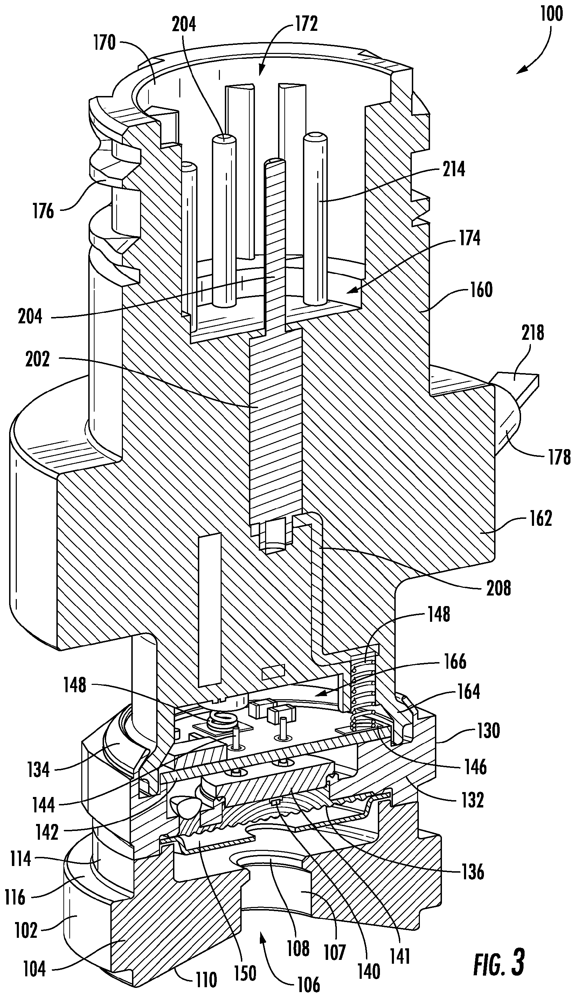

In the illustrated embodiment, FIGS. 7-10 show the three of the pin assemblies 200 and four of the pin assemblies 210 as they are arranged when molded in the main body 162 of the connector portion 160, however any suitable number and arrangement of pin assemblies may be used. In the illustrated embodiment, each of the pin assemblies 200 comprise a pin having a smaller diameter distal portion 204 that is insertable into a cable (not illustrated) attached to the top, distal open end 170 of the pressure sensor, a larger diameter main body 202, and a terminal 208 that is crimped to the proximal end of the main body 202 via crimp connection 206. In the illustrated embodiment, extending from the crimp connection 206, the terminal 208 has a first portion that extends substantially parallel to the longitudinal axis of the main body 202 and a second portion that is substantially perpendicular to the longitudinal axis of the main body 202. In various embodiments, this shape of the terminal 208 enables an electrical connection between each of the pin assemblies 200 and the PCB 142. As best seen in FIG. 3, the pressure sensor comprises a plurality of springs 148, the number of springs 148 being equal to the number of the pin assemblies 200. To provide an electrical connection between the PCB 142 and each of the pin assemblies 200 (and therefore to provide a pressure signal from the PCB 142 to an external device, such as a controller), each of the plurality of springs 148 is sandwiched between a respective one of the planar terminals 146 of the PCB 142 and the substantially perpendicular portion of the terminal 208 of a respective one of the connector pin assemblies 200.

In the illustrated embodiment, each of the second plurality of pin assemblies 210 comprise a pin having a smaller diameter distal portion 214 that is insertable into a cable (not illustrated) attached to the top, distal open end 170 of the pressure sensor, a larger diameter main body 212, and a terminal 218 that is crimped to the proximal end of the main body 212 via crimp connection 216. In the illustrated embodiment, the terminal 218 is substantially perpendicular to the longitudinal axis of the main body 212. In various embodiments, this shape of the terminal 218 enables the terminal of each of the pin assemblies 210 to protrude through the side wall of the main body 162 of the connector portion 160 to enable an electrical connection between, for example, a controller receiving a sensed pressure signal from the pressure sensor and an exhaust gas valve of an electronically controlled exhaust valve brake system.

In various embodiments of the present disclosure, the base port 102 of the pressure sensor 100 has an internal throat structure (throat 107 having a reduced diameter distal neck 108) which readily facilitates the proper insertion of a nozzle for injecting a fluid of a known pressure for calibration of the pressure sensor. FIG. 6 illustrates such a calibration nozzle 190 having an internal bore 192 and a distal opening 196 through which a test fluid at a known pressure is introduced into the base port 102. In the illustrated embodiment, the calibration nozzle 190 has a circumferential channel 198 near the distal end to receive an O-ring 194. In various embodiments, the O-ring 194 provides a seal to prevent the test fluid from escaping out of the base port 102, and the reduced diameter distal neck 108 of the throat 107 prevents the distal end of the calibration nozzle 190 from being inserted too deep into the channel 106 of the base port 102.

The sensing portion 130 and the connector portion 160 may be affixed to each other using any suitable method or mechanism. In the illustrated embodiment, as seen in FIGS. 3 and 6, the lower, proximal collar 164 of the connector portion 160 is inserted into the upper, distal end of the sensing portion 130 and the upper edge 134 of the sensing portion 130 is crimped inward to secure the connector portion 160.

In various embodiments, the base port 102 is constructed of any suitable material, such as, but not limited to, 304L stainless steel. In various embodiments, the main body 132 of the sensing portion 130 is constructed of any suitable material, such as, but not limited to, 304L stainless steel. In various embodiments, the main body 162 of the connector portion 160 is constructed of any suitable material, such as, but not limited to, polybutylene terephthalate reinforced with 30% glass fiber (PBT GF30).

While the description above provides an example pressure sensor 100, it is noted that the scope of the present disclosure is not limited to the description above. In some examples, an example pressure sensor 100 in accordance with the present disclosure may be in other forms. In some examples, an example pressure sensor 100 may comprise one or more additional and/or alternative elements, and/or may be structured differently than that illustrated in FIGS. 1-10.

While various embodiments in accordance with the principles disclosed herein have been shown and described above, modifications thereof may be made by one skilled in the art without departing from the teachings of the disclosure. The embodiments described herein are representative only and are not intended to be limiting. Many variations, combinations, and modifications are possible and are within the scope of the disclosure. Alternative embodiments that result from combining, integrating, and/or omitting features of the embodiment(s) are also within the scope of the disclosure. Accordingly, the scope of protection is not limited by the description set out above, but is defined by the claims which follow, that scope including all equivalents of the subject matter of the claims. Each and every claim is incorporated as further disclosure into the specification and the claims are embodiment(s) of the present disclosure. Furthermore, any advantages and features described above may relate to specific embodiments but shall not limit the application of such issued claims to processes and structures accomplishing any or all of the above advantages or having any or all of the above features.

In addition, the section headings used herein are provided for consistency with the suggestions under 37 C.F.R. § 1.77 or to otherwise provide organizational cues. These headings shall not limit or characterize the disclosure set out in any claims that may issue from this disclosure. For instance, a description of a technology in the "Background" is not to be construed as an admission that certain technology is prior art to any disclosure in this disclosure. Neither is the "Summary" to be considered as a limiting characterization of the disclosure set forth in issued claims. Furthermore, any reference in this disclosure to "disclosure" or "embodiment" in the singular should not be used to argue that there is only a single point of novelty in this disclosure. Multiple embodiments of the present disclosure may be set forth according to the limitations of the multiple claims issuing from this disclosure, and such claims accordingly define the disclosure, and their equivalents, which are protected thereby. In all instances, the scope of the claims shall be considered on their own merits in light of this disclosure but should not be constrained by the headings set forth herein.

Also, systems, subsystems, apparatuses, techniques, and methods described and illustrated in the various embodiments as discrete or separate may be combined or integrated with other systems, modules, techniques, or methods without departing from the scope of the present disclosure. Other devices or components shown or discussed as coupled to, or in communication with, each other may be indirectly coupled through some intermediate device or component, whether electrically, mechanically, or otherwise. Other examples of changes, substitutions, and alterations are ascertainable by one skilled in the art and could be made without departing from the scope disclosed herein.

Many modifications and other embodiments of the disclosure set forth herein will come to mind to one skilled in the art to which these embodiments pertain having the benefit of teachings presented in the foregoing descriptions and the associated figures. Although the figures only show certain components of the apparatuses and systems described herein, various other components may be used in conjunction with the components and structures disclosed herein. Therefore, it is to be understood that the disclosure is not to be limited to the specific embodiments disclosed and that modifications and other embodiments are intended to be included within the scope of the appended claims. For example, the various elements or components may be combined, rearranged, or integrated in another system or certain features may be omitted or not implemented. Moreover, the steps in any method described above may not necessarily occur in the order depicted in the accompanying drawings, and in some cases one or more of the steps depicted may occur substantially simultaneously, or additional steps may be involved. Although specific terms are employed herein, they are used in a generic and descriptive sense only and not for purposes of limitation.

## Claims

1. A pressure sensor comprising:
a base port adapted to be connected to a source of a fluid whose pressure is to be sensed;
a sensing portion adapted to receive the fluid via the base port, the sensing portion comprising a diaphragm adapted to be contacted by the fluid when the base port is connected to the source of the fluid, a sense die, a pressure transfer fluid to translate movement of the diaphragm to the sense die, and a printed circuit board (PCB) electrically connected to the sense die; and
a connector portion having a main body and comprising a first plurality of connector pins and a second plurality of connector pins, each of the first plurality of connector pins having a first end electrically connected to the PCB and a second end exposed via an open end of the main body, each of the second plurality of connector pins having a first end exposed through a side wall of the main body and a second end exposed via the open end of the main body;
wherein the second ends of each of the first plurality of connector pins are adapted to be electrically connected to a controller such that the controller receives a pressure signal from the PCB;
wherein the second ends of each of the second plurality of connector pins are adapted to be electrically connected to the controller; and
wherein the first ends of each of the second plurality of connector pins are adapted to be electrically connected to one or more external devices.

2. The pressure sensor of claim 1, wherein each of the second plurality of connector pins are adapted to pass one or more control signals from the controller to the one or more external devices.

3. The pressure sensor of claim 1, at least a portion of each of the first plurality of connector pins and at least a portion of each of the second plurality of connector pins are molded into the main body of the connector portion.

4. The pressure sensor of claim 1, wherein the open end of the main body of the connector portion comprises an externally threaded wall that defines a cavity; and
wherein the second ends of the first plurality of connector pins and the second ends of the second plurality of connector pins do not extend outside of the cavity.

5. The pressure sensor of claim 4, wherein the cavity comprises a reduced diameter proximal portion; and
wherein the pressure sensor further comprises a sealant within the reduced diameter proximal portion to seal a plurality of openings through which the first plurality of connector pins and the second plurality of connector pins protrude into the cavity.

6. The pressure sensor of claim 1, wherein each of the first plurality of connector pins comprise an elongated cylindrical portion and a terminal having a portion that is substantially perpendicular to a longitudinal axis of the elongated cylindrical portion.

7. The pressure sensor of claim 6, wherein the PCB comprises a plurality of planar terminals;
wherein the pressure sensor further comprises a plurality of springs; and
wherein each of the plurality of springs is sandwiched between a respective one of the plurality of planar terminals of the PCB and the substantially perpendicular portion of the terminal of a respective one of the first plurality of connector pins.

8. The pressure sensor of claim 6, wherein the terminal of each of the first plurality of connector pins has a portion that is between the elongated cylindrical portion and the substantially perpendicular portion and that is substantially parallel to the longitudinal axis of the elongated cylindrical portion.

9. The pressure sensor of claim 6, wherein each of the second plurality of connector pins comprises an elongated cylindrical portion and a terminal attached to and projecting substantially perpendicularly from the elongated cylindrical portion relative to a longitudinal axis of the elongated cylindrical portion.

10. The pressure sensor of claim 1, wherein the base port comprises a substantially cylindrical body defining a longitudinal through-hole, the through-hole defined by (a) an enlarged funnel-shaped proximal open end, (b) a throat having (i) a first portion adjacent the funnel-shaped proximal open end and having a first diameter and a (ii) second portion having a second diameter smaller than the first diameter, and (c) an enlarged distal open end adjacent the second portion of the throat.

11. A method of controlling one or more devices based at least in part on a pressure measurement, the method comprising:
connecting a pressure sensor to a source of a fluid whose pressure is to be sensed, the pressure sensor comprising:
(a) a base port selectively connectable to the source of the fluid;
(b) a sensing portion to receive the fluid via the base port, the sensing portion comprising a diaphragm to be contacted by the fluid, a sense die, a pressure transfer fluid to translate movement of the diaphragm to the sense die, and a printed circuit board (PCB) electrically connected to the sense die; and
(c) a connector portion having a main body and comprising a first plurality of connector pins and a second plurality of connector pins, each of the first plurality of connector pins having a first end electrically connected to the PCB and a second end exposed via an open end of the main body, each of the second plurality of connector pins having a first end exposed through a side wall of the main body and a second end exposed via the open end of the main body;
electrically connecting a controller to the second ends of each of the first plurality of connector pins and to the second ends of each of the second plurality of connector pins;
electrically connecting the one or more devices to the first ends of each of the second plurality of connector pins;
receiving, by the controller, a pressure signal from the PCB via the first plurality of pins, the pressure signal corresponding to a pressure of the fluid against the diaphragm; and
sending, by the controller, a control signal to the one or more devices via the second plurality of pins, the control signal based at least in part on the received pressure signal.

12. The method of claim 11, at least a portion of each of the first plurality of connector pins and at least a portion of each of the second plurality of connector pins are molded into the main body of the connector portion.

13. The method of claim 11, wherein the open end of the main body of the connector portion comprises an externally threaded wall that defines a cavity;
wherein the second ends of the first plurality of connector pins and the second ends of the second plurality of connector pins do not extend outside of the cavity;
wherein the cavity comprises a reduced diameter proximal portion; and
wherein the pressure sensor further comprises a sealant within the reduced diameter proximal portion to seal a plurality of openings through which the first plurality of connector pins and the second plurality of connector pins protrude into the cavity.

14. The method of claim 11, wherein each of the first plurality of connector pins comprise an elongated cylindrical portion and a terminal having a portion that is substantially perpendicular to a longitudinal axis of the elongated cylindrical portion;
wherein the PCB comprises a plurality of planar terminals;
wherein the pressure sensor further comprises a plurality of springs;
wherein each of the plurality of springs is sandwiched between a respective one of the plurality of planar terminals of the PCB and the substantially perpendicular portion of the terminal of a respective one of the first plurality of connector pins;
wherein the terminal of each of the first plurality of connector pins has a portion that is between the elongated cylindrical portion and the substantially perpendicular portion and that is substantially parallel to the longitudinal axis of the elongated cylindrical portion;
wherein each of the second plurality of connector pins comprises an elongated cylindrical portion and a terminal attached to and projecting substantially perpendicularly from the elongated cylindrical portion relative to a longitudinal axis of the elongated cylindrical portion;
wherein a proximal end of the terminal of each of the first plurality of connector pins is crimp connected to a proximal end of its respective elongated cylindrical portion; and
wherein a proximal end of the terminal of each of the second plurality of connector pins is crimp connected to a proximal end of its respective elongated cylindrical portion.

15. The method of claim 11, wherein the base port comprises a substantially cylindrical body defining a longitudinal through-hole, the through-hole defined by (a) an enlarged funnel-shaped proximal open end, (b) a throat having (i) a first portion adjacent the funnel-shaped proximal open end and having a first diameter and a (ii) second portion having a second diameter smaller than the first diameter, and (c) an enlarged distal open end adjacent the second portion of the throat.
